# EUROPEAN PATENT SPECIFICATION

(11) **EP 2 447 805 B1**
(45) Date of publication and mention of the grant of the patent: **01.07.2015**
(21) Application number: 10187235.6
(22) Date of filing: 12.10.2010
(51) Int. Cl.: G06F 1/08

(54) **Apparatus and method for synchronizing and providing a glitch-free clock**
Vorrichtung und Verfahren zur Synchronisierung und Bereitstellung eines störfreien Takts
Appareil et procédé pour la synchronisation et la fourniture d'une horloge sans impulsions transitoires

(43) Date of publication of application: 02.05.2012
(73) Proprietor: Nokia Technologies Oy, 02610 Espoo (FI)
(72) Inventor: Pennala, Jussi, 02150, Espoo (FI); Hatula, Ari, 90100, Oulu (FI)
(74) Representative: Anderson, Oliver Ben

(56) References cited:
- EP-A1- 1 705 815
- US-A1- 2003 227 300

## Description

### Field of the Invention

The invention relates to a clock selector for a multi-clock design and more particularly to an apparatus for synchronizing and selecting a clock from among a plurality of asynchronous clocks of different phases to provide a glitch-free output clock signal.

### Background of the Invention

A clock signal is used in digital electronic to control the operations of different electrical or electronic circuits. Therefore, for devices that operate with multiple clock sources, a clock selection circuit which selects between two or more frequencies and phase locked sources can produce output transients. The clock selection circuit which controls difference clock sources can create glitches and intermediate clock behavior on the output clock.

Dulling the operations of the electrical and electronic circuits and especially of the microprocessors, glitches may erratically clock subsequent circuits or logic such as flip-flops, latches etc, which can create errors, disruptions or other serious consequences.

EP1705815 describes a digital clock switching means operable to deadlock-free switch the source of the digital clock for an integrated circuit, comprising a first finite state machine associated with a first clock source, and a second finite state machine associated with a second clock source.

### Summary of the Invention

The glitch-free clock selector according to the present invention provides a glitch free clock and tolerates any kind of signals (synchronous or asynchronous) in the clock selector line.

Various examples and aspects of the invention are set out in the claims and figures.

According to a first aspect described in this specification, an apparatus with two synchronizer units is provided comprising:
a first synchronizer unit connected to a first clock signal, having a first input configured to receive a clock select signal and a second input configured to receive a status signal of a second clock and configured to generate a synchronized enable request signal of the first clock and a synchronized status signal of the second clock; a first processor configured to receive the synchronized enable request signal of the first clock and the synchronized status signal of the second clock and configured to generate a synchronized enable signal of the first clock and a status output signal of the first processor; and a first clock gate configured to receive the enable signal of the first clock to gate the first clock signal and to transmit the first clock signal to an output gate; and
a second synchronizer unit connected to a second clock signal, having a first input configured to receive an inverted signal of the clock select signal and a second input configured to receive a status signal of the first clock and configured to generate a synchronized enable request signal of the second clock and a synchronized status signal of the first clock; a second processor configured to receive the synchronized enable request signal of the second clock and the synchronized status signal of the first clock and configured to generate an enable signal of the second clock and a status output signal of the second processor; and a second clock gate configured to receive the enable signal of the second clock to gate the second clock signal and to transmit the second clock signal to the output gate which generates an output clock signal.

According to another aspect described in this specification, an apparatus with three synchronizer units is provided comprising:
a first synchronizer unit connected to a first clock signal having a first input configured to receive a clock select signal through a 2-to-3 decoder and a second input and third input configured to receive respectively a status signal of a second clock and a status signal of a third clock, and configured to generate a synchronized enable request signal of the first clock and synchronized status signals of respectively the second and third clocks to a first OR-gate; a first processor configured to receive the synchronized enable request signal of the first clock and an output signal of the first OR-gate, and configured to generate an enable signal of the first clock and a status output signal of the first processor; and a first clock gate configured to receive the enable signal of the first clock to gate the first clock signal and to transmit the first clock signal to an output gate;
a second synchronizer unit connected to a second clock signal, having a first input configured to receive the clock select signal through the 2-to-3 decoder, and a second input and third input configured to receive respectively a status signal of the first clock and a status signal of the third clock, and configured to generate a synchronized enable request signal of the second clock and synchronized status signals of respectively the first and third clocks to a second OR-gate; a second processor configured to receive the synchronized enable request signal of the second clock and an output signal of the second OR-gate, and configured to generate an enable signal of the second clock and a status output signal of the second processor; and a second clock gate configured to receive the enable signal of the second clock to gate the second clock signal and to transmit the second clock signal to the output gate; and
a third synchronizer unit connected to a third clock signal, having a first input configured to receive the clock select signal through the 2-to-3 decoder, and a second input and third input configured to receive respectively status signals of the first and second clocks, and configured to generate a synchronized enable request signal of the third clock and synchronized status signals of respectively the first and second clocks to a third OR-gate; a third processor configured to receive the synchronized enable request signal of the third clock and an output signal of the third OR-gate, and configured to generate an enable signal of the third clock and a status output signal of the third processor; and a third clock gate configured to receive the enable signal of the third clock to gate the third clock signal and to transmit the third clock signal to the output gate which generates an output clock signal.

According to a further aspect described in this specification, an apparatus with a number N higher than 3 of synchronizer units is provided, comprising:
a number N of synchronizer units, wherein each synchronizer is configured to be connected to an assigned clock signal, each synchronizer unit having a first input configured to receive a clock select signal through a ceil(log2(N))-to-N decoder, and (N-1) inputs configured to receive respectively status signals of other (N-1) clocks, and configured to generate a synchronized enable request signal of the assigned clock and (N-1) synchronized status signals of other (N-1) clocks to an assigned OR-gate;
a number N of processors, wherein each processor is configured to receive the synchronized enable request signal of the assigned clock and output signal of the assigned OR-gate and configured to generate an enable signal of the assigned clock and a status output signal of the processor; and
a number N of clock gates, wherein each clock gate is configured to receive the enable signal of the assigned clock to gate the assigned clock signal and to transmit the assigned clock signal to an output gate which in turn generates a free glitch output clock signal.

In another exemplary embodiment, the apparatus further comprises a number N of flip flops, wherein each flip flop is configured to receive the status output signal of the corresponding processor to provide the assigned clock status signal and to retime the corresponding processor status output signal.

### Brief Description of the Drawings

FIG.1 shows conventional multiplexer consisting of combinatorial logic which is a typical circuit for switching between two clock sources.

FIG. 2 is a timing diagram of the conventional multiplexer of FIG.1 showing a glitch.

FIGs.3A-3B-3C-3D illustrate different timing diagrams of clock change with and without a glitch in different situations.

FIG. 4-1 illustrates an exemplary implementation of the present invention for a two-clock source environment.

FIG. 4-2 illustrates exemplary embodiments of synchronizers utilized in the present invention.

FIG.5 illustrates an exemplary finite state machine utilized in the present invention.

FIG. 6 illustrates a state diagram of the state machine of FIG.5.

FIG.7 illustrates an exemplary clock gate utilized in the present invention.

FIG.8 illustrates an exemplary implementation of the present invention for a three-clock source environment.

FIG. 9 illustrates an exemplary implementation of the present invention for a number N of clock sources.

### Detailed description of the Drawings

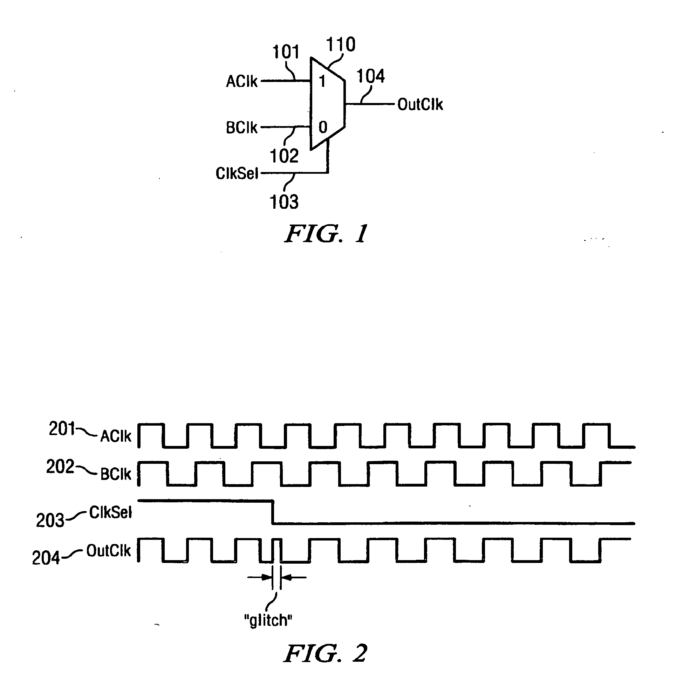

FIG. 1 illustrates a conventional multiplexer 110 consisting of combinatorial logic. The multiplexer 110 has two inputs. A first input 101 receives a clock signal AClk. AClk is the reference clock to multiplexer input pin 1. The second input 102 receives a clock signal BClk. BClk is the reference clock to multiplexer input pin 0. The multiplexer also receives a clock selection signal ClkSel on a third input 103. The ClkSel value determines which one of the two input pins of the multiplexer is selected as an output pin 104 referred as OutClk. When ClkSel=1, the multiplexer output OutClk receives AClk; and when ClkSel=0, the OutClk receives BClk.

In this exemplary embodiment, the multiplexer 110 is also called a 2-to-1 multiplexer that selects output from 2 inputs based on ClkSel value.

When the ClkSel input 103 is high (=1), the output clock signal of the multiplexer OutClk gets its value from AClk, which means that the AClk is directed to the multiplexer output pin (OutClk) when ClkSel is 1.

When the ClkSel input 103 is low (=0), the output clock signal of the multiplexer OutClk gets its value from BClk, which means that the BClk is directed to the multiplexer output pin (OutClk) when ClkSel is 0.

FIG. 2 shows a timing diagram of the conventional multiplexer of FIG.1. It illustrates the waveforms of logical value (low/high: 0/1) of each input and output of the multiplexer of FIG. 1 as a function of time. When the clock is switched at a wrong time, a glitch occurs on the output pin of the multiplexer. In this exemplary embodiment, the timing diagram shows the multiplexer first input clock signal, AClk signal 201. The multiplexer second input clock signal is referred as BClk signal 202. Conversely, the timing diagram of multiplexer select input is referred as ClkSel 203. ClkSel signal changes its state asynchronously to AClk and BClk clock signals (with no respect to the values of the input clocks). In the present case, the Output Clock is first set to AClk (pin 1) and then to BClk (pin 0) which produces a glitch shown in the OutClk signal 204 at the time of the switch as shown on the waveform/timing diagram of multiplexer output clock OutClk signal 204. The glitch happens because the state transition occurs at a wrong time. The OutClk period and active time is shorter than any of the input clocks.

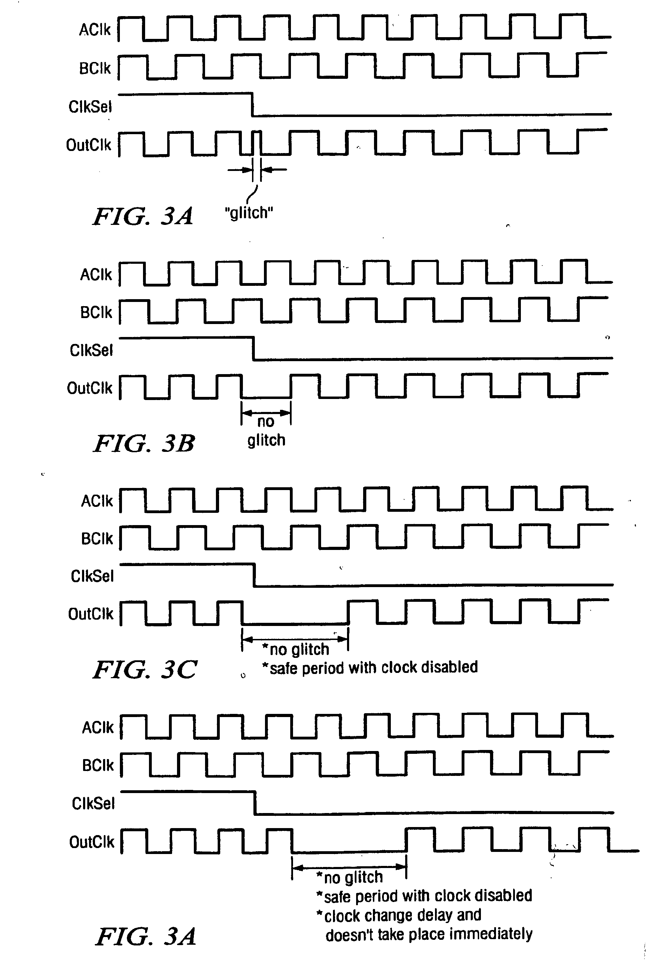

FIGs.3A-3B-3C-3D illustrate different types of waveforms with different kinds of clock muxing principles. In practice, they are not simulated with real circuits but showing theoretical behaviors and features with/without glitch; with/without delay; with/without blank safe period.

FIG. 3A shows how the MUX in FIG. 1 behaves when the ClkSel signal changes from AClk signal to BClk signal and which produces a glitch at the time of the switch.

FIG. 3B shows an example where the ClkSel signal changes from AClk signal to BClk signal without producing a glitch. The clock change is effective immediately. Since the clocks are asynchronous and have high frequencies, the synchronization is needed and it typically introduces not only a safe period wherein both clocks are disabled but also a delayed effect to propagate the ClkSel signal through the synchronizers.

FIG. 3C shows an example where the ClkSel changes from AClk signal to BClk signal without producing a glitch. The clock change is effective immediately but there is safe period (which corresponds to an empty period, a blank period, or a gated period) when neither clock signals are propagated to the output. This is closer to what can be achieved in practice and the ClkSel signal will not be synchronized because of the high speed and the effect is seen at the output immediately.

FIG. 3D shows an example where the ClkSel changes from AClk signal to BClk signal without producing a glitch. The clock change is effective one clock period later because of the synchronization delay. During the change period, there is also a safe or "blank" period where both clocks are disabled. The safe period enables settling time for both clocks during the change, which prevents any possible glitches caused by the transition between the asynchronous clocks. Hence, although the clock is changed from AClk signal to BClk signal, there are still one or more rising edges of the AClk signal before the output clock OutClk is switched to the BClk signal.

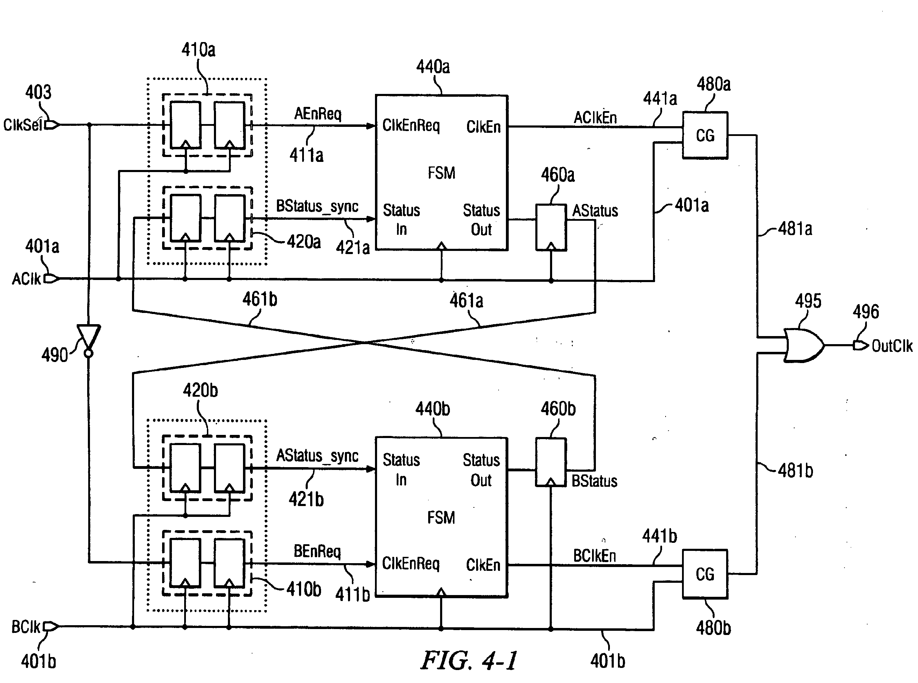

FIG. 4-1 illustrates the present invention comprising two identical branches which are connected to receive the signal of the clock select input 403 and the signal of the other branch status. Each branch has its own clock;A first branch comprises a first reference clock input that receives a first clock signal AClk 401 a and a second branch comprises a second reference clock input that receives a second clock signal BClk 401b. The ClkSel input is for selecting the output clock and it can have 2 values, low and high for instance (or 0 and 1). In an exemplary embodiment, when the ClkSel input is low, the OutClk corresponds to the second clock signal BClk or is changing to BClk, and when the ClkSel input is high, the OutClk corresponds to the first clock signal AClk or changing to AClk. The first branch reads the ClkSel input directly and the second branch reads an inverted value of the ClkSel. The ClkSel input signal is asynchronous to both clocks AClk and BClk, meaning that it does not change its value with respect to either or both clock edges.

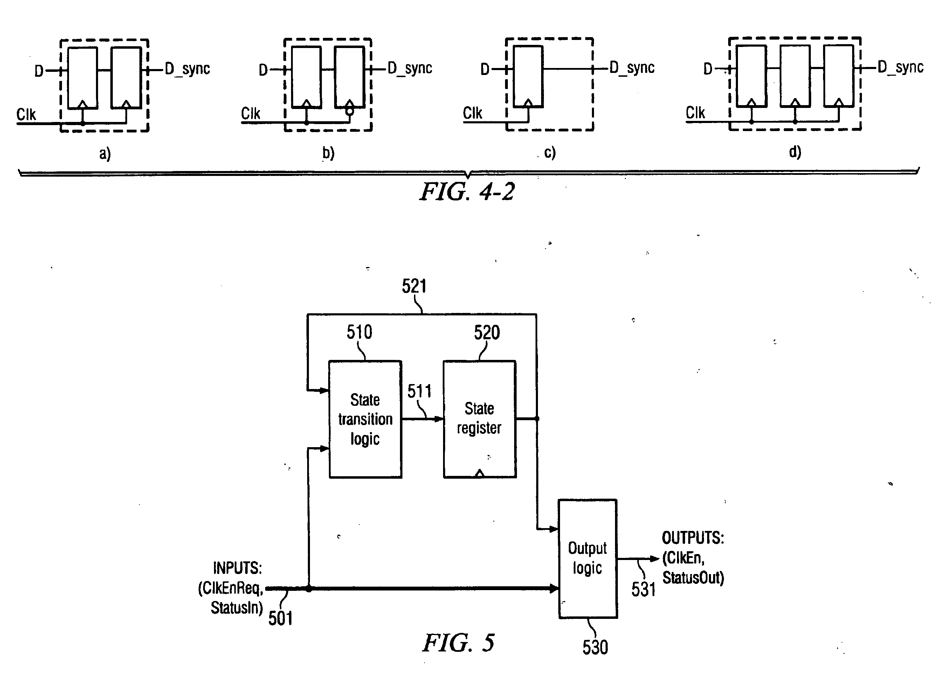

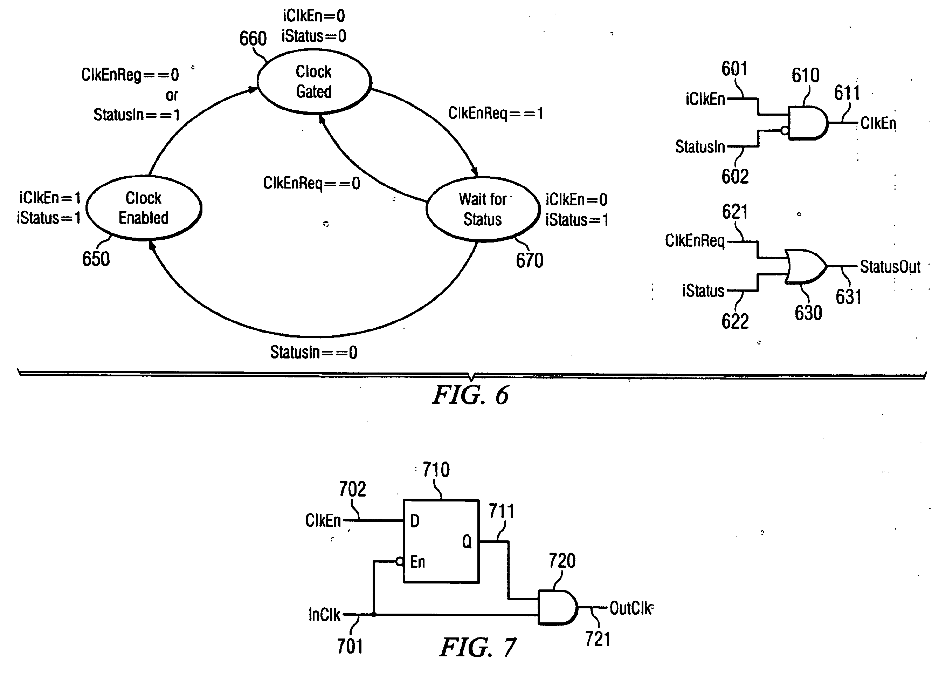

The first branch, associated to AClk, of this exemplary embodiment comprises a first synchronizer unit, which may be a pair of synchronizers 410 and 420 described in FIG. 4-2, a first processor 440a or FSM illustrated in FIG.5 and FIG.6, a flip-flop 460a, and a first clock gate 480a illustrated in FIG. 7. These are described with more details in the following sections.

The first synchronizer unit comprises two synchronizers: a first synchronizer 410a and a second synchronizer 420a. In another implementation with more than two clocks, the first synchronizer unit can contain a set of any number of synchronizers which can be connected in parallel.

The first synchronizer 410a is used in the first branch to remove the metastability and to synchronize the ClkSel input value to AClk. The first synchronizer 410a generates an enable request signal of the first clock referred as AEnReq signal 411a to the first processor.

The second synchronizer 420a is used in the first branch to remove the metastability and to synchronize the status signal of a second clock, BStatus, to the first clock AClk. The second synchronizer 420a generates a synchronized status signal of the second clock referred as BStatus_sync signal 421a. The BStatus_sync signal indicates the state in a second branch associated to the second clock BClk.

The first and second synchronizers 410a and 420a are part of a first synchronizer unit associated to the first branch and to the first clock AClk. In another implementation, the first synchronizer unit can contain a set of any number of synchronizers which can be connected in parallel.

The first processor, comprising a FSM 440a, function and behavior are described in more detail in FIG.5 and FIG. 6. The instantiation of the first FSM 440a is described in this section. The first FSM 440a comprises 2 inputs and 2 outputs. It is configured to receive the synchronized enable request signal of the first clock AEnReq 411a and the synchronized status signal of the second clock BStatus_sync 421a and it is also configured to generate an enable signal of the first clock AClkEn 441 a and a status output signal of the first FSM. The AClkEn 441a is also referred as the clock enable signal from FSM. When AClkEn is high, the AClk is enabled.

The flip-flop 460a is implemented in the first branch to provide a registered output for the synchronizer in the second branch associated to the BClk and to retime AStatus signal 461a because the AClkEn 441 a change takes effect not immediately but on the following clock cycle. The AStatus 461a signal to the second branch associated to BClk is used to gate the second clock BClk.

The first Clock Gate 480a is also implemented in the first branch and is configured to receive the enable signal of the first clock AClkEn 441 a to gate the first clock signal AClk 401 a and to transmit the first clock signal 481 a to one of the two inputs of an output gate 495. The first Clock Gate 480a enables or disables AClk based on AClkEn signal 441a. One exemplary embodiment of the clock gate is shown in FIG.7 which is gate-to-low clock gate meaning that when the clock is disabled, the output value is low (or 0).

The second branch of this exemplary embodiment gets the input value from an inverter 490 which is connected to the ClkSel signal. The inverted ClkSel is then received by a second synchronizer unit which is associated to the second clock BClk. Since the second branch is a mirror image of the first branch, the numeral references will contain the letter 'b' as opposed to the letter 'a' for the first branch.

The second synchronizer unit, which is a pair of synchronizers 410b, 420b in this exemplary embodiment, is connected to the second clock signal BClk 401b, having a first input for receiving the inverted signal 490 of the clock select signal ClkSel 403 and a second input configured to receive a status signal AStatus 461a of the first clock. The second synchronizer unit is able to generate a synchronized enable request signal of the second clock BEnReq 411b and a synchronized status signal of the first clock AStatus_sync 421b.

The second branch also comprises a second processor or a second finite state machine FSM for receiving the synchronized enable request signal of the second clock BEnReq 411b and the synchronized status signal of the first clock AStatus_sync 421b, and for generating an enable signal of the second clock BClkEn 441b and a status output signal of the second processor or the finite state machine FSM.

A second clock gate 480b is also configured in the second branch to receive the enable signal of the second clock BClkEn 441b to gate the second clock signal and to transmit the second clock signal 481b to the output gate 495 which then generates an output clock signal 496. The output gate 495 may be a logical OR-gate wherein the output is high when either one of the inputs is high. In this invention the inputs of the logical OR-gate are never high at the same time. This would be AND-gate if a gate-to-high clock gating was used.

It should be kept in mind that all the_b items in the second branch associated to the second clock BClk have exactly the same functions as in the first branch which is associated to the first clock AClk, except that they are from B-standpoint.

FIG. 4-2 illustrates exemplary embodiments of the synchronizers depicted in doted lines in FIG. 4-1. The synchronizers may consist of two concatenated flip-flops but they may also comprise a different number of flip-flops which are connected in series. Each synchronizer has two inputs, a first input for the clock signal and a second input for the asynchronous signal, and one output which is synchronous to the clock signal.

The function of a synchronizer is to remove the metastability of the asynchronous input signal and to synchronize the input to the clock connected to the synchronizer. The output signal of the synchronizer can be used as a normal synchronous signal. The depicted 2 flip-flop synchronizers are commonly implemented in today designs. Nevertheless, the number of concatenated flip-flops and the types of clock edges (i.e rising or falling) will depend on the technology and application. More flip-flops in series can help to remove the metastability The exemplary embodiments of the present invention are not dependent on the number of flip-flops and the types of clock edges. Any one of the four types of synchronizer a, b, c and d in FIG. 4-2 can be implemented in this present invention.

Fig. illustrates an exemplary embodiment of the structure of the processor 440 consisting of a FSM. The FSM may be a Mealy type Finite State Machine which means that the input can affect the output immediately. The state register is a sequential element consisting of 2 flip-flops (needed to represent 3 state binary combination). FIG.5 illustrates the general case of a Mealy FSM architecture for the state diagram shown in FIG. 6.

The FSM uses only input actions, i.e., the output depends on the input and the state. Mealy FSM input affects the output directly resulting in a faster output change. The use of a Mealy FSM leads often to a reduction of the number of states. Any other FSMs that have fast output change can also be implemented in the exemplary embodiment.

The FSM of FIG.5 has 2 types of input signals: ClkEnReq 501 and StatusIn 501. ClkEnReq tells if the input is requesting to enable the clock and StatusIn 501 is the status of the other clock of the other branch. Both inputs are affecting the next state of the FSM (in state transition logic) and also the output directly and immediately.

The FSM comprises a state transition logic 510 which determines the next state based on the inputs ClkEnReq 501 and StatusIn 501 and the current state (which is a feedback from the state register. The state diagram shown in FIG. 6 will illustrate how the inputs affect the state. The state transition logic 510 generates a state transition signal 511 which provides the next state to a state register 520. The next state also referred as state transition signal 511 is effective at the state register output on the following clock cycle.

In an exemplary embodiment, the state register 520 consists of 2 flip-flops and holds a 2-bit value denoting one of the 3 possible states shown in Fig. 6. The state register 520 provides the current state signal 521 to an output logic 530 in which an output control signal values are resolved. This can also be seen on the right side in FIG. 6 which illustrates the output as a function of input event and the current state of the FSM. The state register 520 also provides the current state signal 521 as a feedback loop to the state transition logic 510.

The output logic 530 resolves the output values 531 based on the state signal 521 provided by the state register 520 and inputs 501. The outputs 531 are ClkEn and StatusOut. The ClkEn is used to enable and disable the clock and the StatusOut is forwarded to the other branch. The outputs 531 can be seen explicitly from FIG. 6 but can also be given in a table as follows:

| FSM status | ClkEnReq | StatusIn | ClkEn | StatusOut |
|---|---|---|---|---|
| ClockGated | 0 | 0 | 0 | 0 |
| ClockGated | 0 | 1 | 0 | 0 |
| ClockGated | 1 | 0 | 0 | 1 |
| ClockGated | 1 | 1 | 0 | 1 |
| WaitForStatus | 0 | 0 | 0 | 1 |
| WaitForStatus | 0 | 1 | 0 | 1 |
| WaitForStatus | 1 | 0 | 0 | 1 |
| WaitForStatus | 1 | 1 | 0 | 1 |
| ClockEnabled | 0 | 0 | 1 | 1 |
| ClockEnabled | 0 | 1 | 0 | 1 |
| ClockEnabled | 1 | 0 | 1 | 1 |
| ClockEnabled | 1 | 1 | 0 | 1 |

The outputs 531 are ClkEn and StatusOut wherein the ClkEn is used to enable the clock and the StatusOut is used to indicate the status to other branch.

FIG. 6 illustrates explicitly how the FSM operates. Both inputs ClkEnReq and StatusIn 501 can cause the FSM to go to ClockGated state. ClkEnReq means that the input wants this branch to be enabled (or selected). ClkEnReq high indicates this. Before enabling the clock the FSM waits until the other branch has been gated / disabled. When StatusIn is low it means the other branch is gated and Clock can be enabled by moving to ClockEnabled state. The inputs have direct effect to the output because other branch status (gating) must be effective as fast as possible.

In this exemplary embodiment, the FSM has 3 different states. In state 660, as iClkEn is low, the clock is gated. Conversely, as iStatus is low, the other branch is also informed that the clock is gated. In state 670, as iStatus is high, the clock enabling sequence is started. iClkEn remains low since the clock cannot be enabled before the other branch is disabled. It waits until the other branch is gated (StatusIn is low). The other branch is also informed that the clock is to be enabled (iStatus is high and iClkEn is low). In state 650, the clock is enabled (iClkEn is high, and iStatus is high). In this state, the other branch clock is gated.

The state diagram is to be read in association with these two side figures of an AND-gate 610 and an OR-gate 630 representing the output encoding from FSM state input. The AND-gate 610 has two inputs and one output. The first input receives the iClkEn signal 601 which comes from the FSM to inform when to enable the clock. The second input receives the StatusIn 602 which comes from the clock of the other branch. The iClkEn signal cannot enable the clock if the StatusIn is high (the other branch is not gated). The StatusIn effect must take place immediately (gating) to prevent both branches to be active at the same time. ClkEn output is high (=clock enabled) only when the StatusIn signal from other branch is low and FSM is in ClockEnabled state. The output of the AND-gate 610 is the ClkEn signal 611 which is transmitted to an input of a clock gate which is described in more detail in FIG.7.

The OR-gate 630 has two inputs and one output. The first input receives ClkEnReq signal 621 which is the clock enable request. When the request is active, the other branch is to be bypassed as fast as possible (directly from the FSM input to its output). The second input receives the iStatus signal 622 which comes from the FSM to inform the other branch if the clock is disabled or not. The output of the OR-gate 630 is the StatusOut signal 631 which is transmitted to the other clock branch. The function of the OR-gate 630 is such that if either one or both of the inputs is high the output is also high.

FIG.7 illustrates an example of a state of the art clock gate (gate-to-low). Instead of using only an AND-gate 720, it contains also a latch 710 that allows ClkEn to be passed through only when InClk is low. When InClk is low, the OutClk is low. Hence, the OutClk contains no glitches because ClkEn cannot gate to low when InClk is high.

The latch 710 has two inputs EN and D and one output Q. The first input EN receives an input clock InClk 701 which is the reference clock input. The second input D receives a clock enable signal ClkEn 702. When the ClkEn signal is high, the clock is enabled (OutClk = InClk). When the ClkEn signal is low, the OutClk clock is low. When the input EN is high Q = D and when the input EN is low Q holds its value. Note that EN is inverted from InClk which is denoted by a small circle in front of the EN pin in FIG.7. Hence, when InClk is low Q = ClkEn value. The output 711 of the latch can change its value only when InClk is low (EN is high).

The AND-gate 720 receives the output 711 of latch 710. When the latch output 711 is high OutClk = InClk. When the latch output 711 is low, OutClk = low. Note that when InClk is high, the latch output 711 cannot change the state (prevents gating glitches) because the latch 710 is disabled (InClk is high).

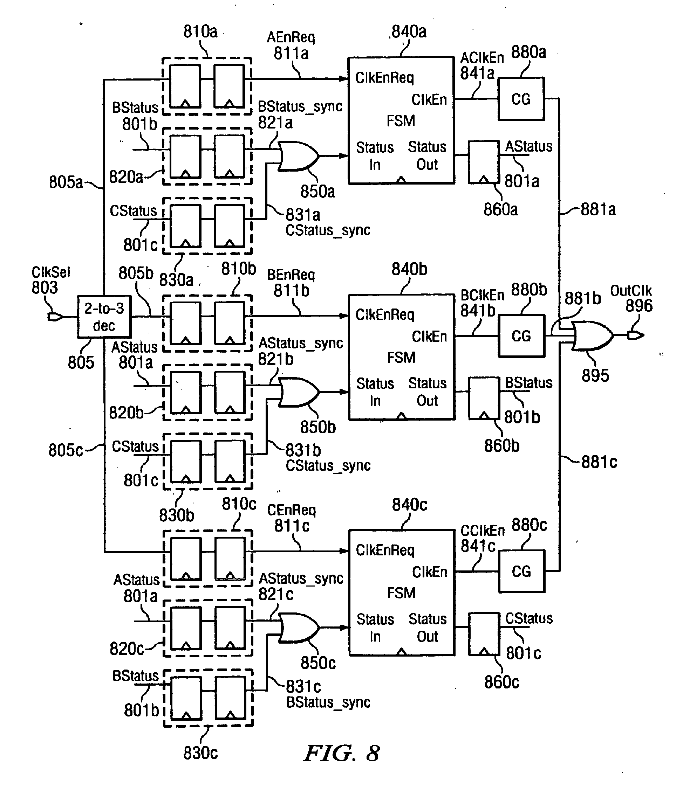

FIG.8 illustrates an exemplary embodiment of an extension of FIG.4-1 with an additional branch unit, wherein each synchronizer unit still has its own clock. The only difference is that instead of having just one "other clock branch" we refer to two other clock branches. The two other branches are taken into account by implementing an OR'ing the <X>Status_sync signals from other branches. Additionally, the input selection signal must be one-hot (one bit is high, the others are low) so that every branch get 1-bit signal indicating the clock selection. "2-to-3 dec" illustrates a decoder that decodes 2-bit selection value to 3-bit one-hot where only one bit is active at a time.

Though FIG.8 is an extension of FIG.4-1 to the case of three synchronizer units, it should not be limited to only these three synchronizer units. The only difference is that instead of having just 2 clock branches we have several. These three branches are taken into account by simply OR'ing the <X>Status_sync signals from other branches. In addition, only one branch is to be selected at a time which is ensured by "2-to-3 dec" 805. The reference clocks are AClk, BClk, and CClk which are not drawn in the figure but they are used exactly in the same way as in FIGs.4-1 and 4-2 for the case of two synchronizer units.

The first synchronizer unit comprises a set of three synchronizers, a first synchronizer 810a, a second synchronizer 820a, and a third synchronizer 830a. The first synchronizer unit is connected to the first clock signal AClk. It has a first input configured to receive a clock select signal 803 through the 2-3 decoder 805 and a second input and third input configured to receive respectively a status signal BStatus 861b of the second clock BClk and a status signal CStatus 861c of the third clock CClk, and configured to generate a synchronized enable request signal AEnReq 811a of the first clock and synchronized signals BStatus_sync 821a, CStatus_sync 831a of respectively the second and third clocks to a first OR-gate 850a.

The first OR-gate 850a takes the status information of the other two clock branches as inputs. It also receives the synchronized signals BStatus_sync and CStatus_sync. If either one or both BStatus_sync and CStatus_sync are high, the output of the first OR-gate is also high. In other words, it collects the information of the other two branches and provides combined information to a first processor or first FSM. Combined information indicates that "all other branches are disabled/gated" or "one or more of the other branches are active".

The first processor 840a is configured to receive the synchronized enable request signal AEnReq 811a of the first clock and an output signal of the first OR-gate 850a, and to generate an enable signal AClkEn 841a of the first clock and a status output signal of the first processor. In an exemplary embodiment, the first processor 840a is the same FSM element as in FIG 4, FIG 5 and FIG 6.

A first clock gate 880a is configured to receive the enable signal AClkEn 841a of the first clock to gate the first clock signal AClk and to transmit the first clock signal to an OR-output gate 895.

The registered output AStatus 801a of the first clock AClk is transmitted to the second and third branches of respectively the second and third clocks BClk and CClk and treated as asynchronous signal. It is mapped to the second and third synchronizers 820b and 820c.

The 2-bit ClkSel signal 803 has 2 bits because it configured to be able to denote 3 different values (to either select the AClk, BClk or CClk). The ClkSel signal 803 is connected to a 2-to-3 decoder 805 which converts the 2-bit value of the ClkSel signal to 3 different lines.

The 2-to-3 decoder 805 generates three output signals 805a, 805b and 805c respectively to the three synchronizer units. The first output signal 805a is used by the first synchronizer unit and it is high when the OutClk selects the first clock AClk. In the meantime, the two other output signals 805b and 805c are low.

The first synchronizer 810a of the first synchronizer unit receives the first output signal 805a from the 2-to-3 decoder 805. In this exemplary embodiment, this first synchronizer consists of two flip-flops. Only one of three output signals 805a, 805b, and 805c of the 2-to-3 decoder 805 can be high at any time.

The second synchronizer 820a of the first synchronizer unit receives the registered output BStatus 801b of the second clock BClk. The registered output BStatus 801b of the second clock BClk is an asynchronous signal that is sent to the first and third clock branches of respectively the first and third clock AClk and CClk.

In the same way, the third synchronizer 830a of the first synchronizer unit receives the registered output CStatus 801c of the third clock CClk. The registered output CStatus 801c of the third clock CClk is an asynchronous signal that is sent to the first and second clock branches of respectively the first and second clock AClk and BClk.

The clock gate 880a of the first branch of the first clock AClk generates the output signal 881a to the OR-output gate 895. When AClkEn 841a is high, the output signal 881a equals AClk; and when AClkEn is low, the output signal 881a is low. Note that the output signal 881a is never enabled at the same time as the output signals 881b and 881c of the clock gates 880b and 880c of respectively the second and third branches of the second and third clocks. Only one signal of the three signals 881a, 881b and 881c is enabled at any time.

The second and third branches of the second and third clocks BClk and CClk comprises the same elements as the first branch of the first clock AClk. For instance, the second branch comprises a second synchronizer unit which includes a set of synchronizers 810b, 820b and 830b. Conversely, the third branch comprises a third synchronizer unit which includes a set of synchronizers 810c, 820c and 830c. The second and third synchronizer units are respectively connected to second and third OR-gate 850b and 850c which respectively generate output signals to second and third processors or FSMs 840b and 840c. The second and third processors or FSMs respectively generates output signals to output registers 860b and 860c indicative of the status of the CStatus and AStatus. At the same time, the processors or FSMs 840b and 840c respectively generates BClkEn signal 841b and CClkEn signal 841c to clock gates 880b and 880c which in turn respectively transmit signals 881b and 881c of clock gates 880b and 880c of respectively the second and third branches to the OR-output gate 895.

The OR-output gate 895 has three inputs. The output is high if one or more of the three inputs 881a, 881b or 881 c are high. In this exemplary embodiment, only one of the inputs 881a/b/c can be high at any time. All 3 inputs are clocks AClk, BClk, and CClk for the first, second and third branches and the output OutClk 896 of the OR-output gate 895 is the output of an exemplary embodiment of the invention which is glitch-free clock. The glitch-free clock output 896 is either the AClk, BClk, or Clk clocks and can also be gated for a while during clock changing.

The initial state of any FSM or processor as described above can always be "Clock gated" 660. Additionally, the initial state of any flip-flop can also be low. In FIG.4-2, the 10 flip-flops (410a, 410b, 420a, 420b, 460a, 460b) can have their initial output values set to low (after reset). Conversely the flip-flops in FIG.8 can also have their initial output values set to low (after reset).

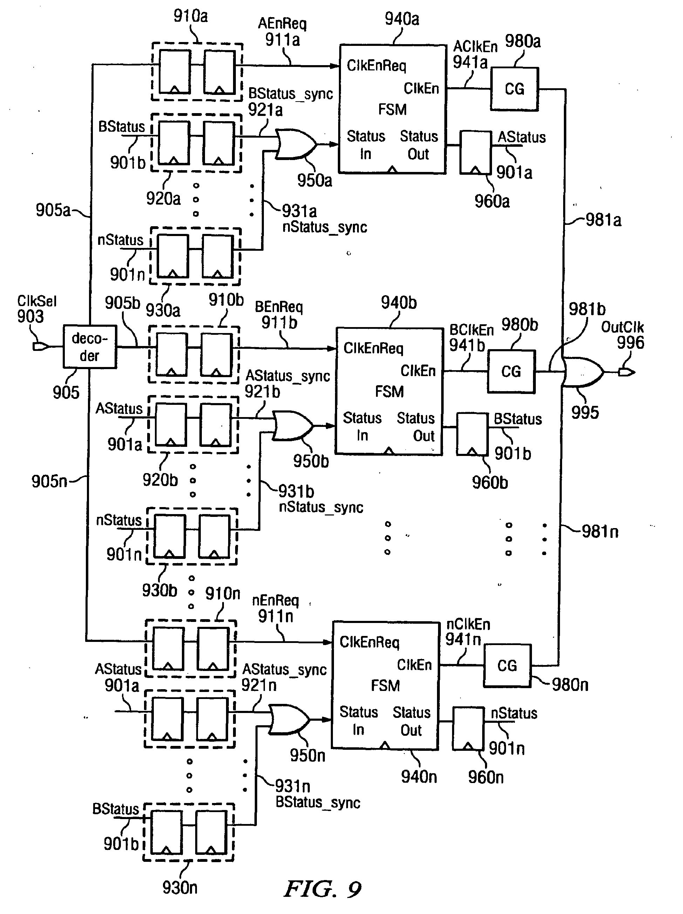

FIG.9 shows a further aspect of the invention wherein an exemplary embodiment comprises an apparatus with a number N higher than 3 of a set of synchronizer units. The apparatus comprises a number N set of synchronizer units indexed from a to n, a number N of processors or FSMs indexed from a to n and a number N of clock gates indexed from a to n as shown in Fig.9.

Each of the N synchronizer units 910a, 910b, ..., and 910n is configured to be connected to an assigned signal, each unit having a first input configured to receive a clock select signal 905 through a ceil(log2(N))-to-N decoder, and (N-1) inputs configured to receive respectively status signals 901a, 901b, ..., 901n of the other (N-1) clocks, and configured to generate a synchronized enable request signal 911a, 911b, ..., 911n of the assigned clock and to generate a combination of (N-1) synchronized status signals 921a, 921b, ..., 921n of other (N-1) clocks to an assigned OR-gate 950a, 950b, ..., and 950n;

Each of the N processors or FSM 940a, 940b, ..., and 940n is configured to receive the synchronized enable request signal of the assigned clock and output signal of the assigned OR-gate 950a, 950b, ..., and 950n, and configured to generate an enable signal 941a, 941b, ..., 941n of the assigned clock and a status output signal 901a, 901b, ..., 901n of the corresponding processor or FSM 940a, 940b, ..., and 940n.

Each of the N clock gates 980a, 980b, ..., and 980n is configured to receive the enable signal 941a, 941b, ..., 941n of the assigned clock to gate the assigned clock signal and to transmit the assigned clock signal to an OR-output gate 995 which in turn generates an output clock signal 996 which is glitch free.

In another exemplary embodiment, the apparatus further comprises a number N of flip flops, wherein each flip flop is configured to receive the status output signal of the corresponding processor to provide the assigned clock status signal and to retime the corresponding processor status output signal.

Embodiments of the present invention may be implemented in software, hardware, application logic or a combination of software, hardware and application logic. The software, application logic and/or hardware may reside on the broadcast receiver or on host side in the wireless portable device. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

## Claims

1. An apparatus, comprising:
a first synchronizer unit (410a, 420a) connected to a first clock signal (401a), having a first input configured to receive a clock select signal (403) and a second input configured to receive a status signal (461b) of a second clock and configured to generate a synchronized enable request signal (411a) of the first clock and a synchronized status signal (421a) of the second clock;
a first processor (440a) configured to receive the synchronized enable request signal of the first clock and the synchronized status signal of the second clock and configured to generate a synchronized enable signal (441a) of the first clock and a status signal (461a) of the first clock;
a first clock gate (480a) configured to receive the enable signal of the first clock to gate the first clock signal and to transmit the first clock signal to an output gate (495);
a second synchronizer unit (410b, 420b) connected to a second clock signal (401b), having a first input configured to receive an inverted signal of the clock select signal and a second input configured to receive the status signal of the first clock and configured to generate a synchronized enable request signal (411b) of the second clock and a synchronized status signal (421b) of the first clock;
a second processor (440b) configured to receive the synchronized enable request signal of the second clock and the synchronized status signal of the first clock and configured to generate an enable signal (441b)of the second clock and the status signal of the second clock; and
a second clock gate (480b) configured to receive the enable signal of the second clock to gate the second clock signal and to transmit the second clock signal to the output gate which generates an output clock signal (496),
wherein the apparatus is **characterized by**:
the status signal (461b) of the second clock being for indicating when the second clock is enabled and for indicating when the second clock is to be enabled; and
the status signal (461 a) of the first clock being for indicating when the first clock is enabled and for indicating when the first clock is to be enabled.

2. The apparatus of claim 1, further comprising:
a first flip flop (460a) configured to receive the status signal of the first clock from the first processor, to retime the status signal of the first clock and to provide the retimed status signal of the first clock; and
a second flip flop (460b) configured to receive the status signal of the second clock from the second processor, to retime the status signal of the second clock and to provide the retimed status signal of the second clock and.

3. The apparatus of claim 1, wherein the first synchronizer unit and the second synchronizer unit comprises respectively a set of synchronizers connected in parallel.

4. The apparatus of claim 3, wherein each synchronizer comprises one or more flip flops.

5. The apparatus of claim 1, wherein the first processor and the second processor are state machines of Mealy type.

6. An apparatus comprising:
a first synchronizer unit (810a, 820a, 830a) connected to a first clock signal having a first input configured to receive a clock select signal through a 2-to-3 decoder (805) and a second input and third input configured to receive respectively a status signal of a second clock for indicating when the second clock is enabled and when the second clock is to be enabled and a status signal of a third clock for indicating when the third clock is enabled and for indicating when the third clock is to be enabled, and configured to generate a synchronized enable request signal of the first clock and synchronized status signals of respectively the second and third clocks to a first gate;
a first processor (840a) configured to receive the synchronized enable request signal of the first clock and an output signal of the first gate, and configured to generate an enable signal of the first clock and a status signal of the first clock for indicating when the first clock is enabled and for indicating when the first clock is to be enabled;
a first clock gate (880a) configured to receive the enable signal of the first clock to gate the first clock signal and to transmit the first clock signal to an output gate (895);
a second synchronizer unit (810b, 820b, 830b) connected to a second clock signal, having a first input configured to receive the clock select signal through the 2-to-3 decoder, and a second input and third input configured to receive respectively the status signal of the first clock and the status signal of the third clock, and configured to generate a synchronized enable request signal of the second clock and synchronized status signals of respectively the first and third clocks to a second gate;
a second processor (840b) configured to receive the synchronized enable request signal of the second clock and an output signal of the second gate, and configured to generate an enable signal of the second clock and the status signal of the second clock;
a second clock gate (880b) configured to receive the enable signal of the second clock to gate the second clock signal and to transmit the second clock signal to the output gate (895);
a third synchronizer unit (810c, 820c, 830c) connected to a third clock signal, having a first input configured to receive the clock select signal through the 2-to-3 decoder, and a second input and third input configured to receive respectively the status signals of the first and second clocks, and configured to generate a synchronized enable request signal of the third clock and synchronized status signals of respectively the first and second clocks to a third gate;
a third processor (840c) configured to receive the synchronized enable request signal of the third clock and an output signal of the third gate, and configured to generate an enable signal of the third clock and the status signal of the third clock; and
a third clock gate (880c) configured to receive the enable signal of the third clock to gate the third clock signal and to transmit the third clock signal to the output gate (895) which generates an output clock signal (896).

7. The apparatus of claim 6, further comprising:
a first flip flop (860a)configured to receive the status signal of the first clock from the first processor, to retime the status signal of the first clock and to provide the retimed status signal of the first clock and;
a second flip flop (860b) configured to receive the status signal of the second clock from the second processor, to retime the status signal of the second clock and to provide the retimed status signal of the second clock; and
a third flip flop (860c) configured to receive the status signal of the third clock from the third processor, to retime the status signal of the third clock and to provide the retimed status signal of the third clock.

8. The apparatus of claim 6, wherein the first, second and third synchronizer units are sets of synchronizers respectively connected in parallel.

9. The apparatus of claim 8, wherein each synchronizer comprises one or more flip flops.

10. The apparatus of claim 6, wherein the first, second and third processor are state machines of Mealy type.

11. The apparatus of claim 6 wherein the first, second and third gates are logical OR-gate.

12. An apparatus, comprising:
a number N higher than 3 of synchronizer units (910a...910n) , wherein each synchronizer is configured to be connected to an assigned clock signal having a first input configured to receive a clock select signal through a ceil(log2(N))-to-N decoder, and (N-1) inputs configured to receive respectively status signals of other (N-1) clocks for indicating when the other clocks are enabled and for indicating when the other clocks are to be enabled, and configured to generate a synchronized enable request signal of the assigned clock and (N-1) synchronized status signals of other (N-1) clocks to an assigned OR-gate;
a number N of processors (940a...940n), wherein each processor is configured to receive the synchronized enable request signal of the assigned clock and the output signal of the assigned OR-gate and configured to generate an enable signal of the assigned clock and the status signal of the assigned clock for indicating when the assigned clock is enabled and for indicating when the assigned clock is to be enabled, and
a number N of clock gates (980a...980n), wherein each clock gate is configured to receive the enable signal of the assigned clock to gate the assigned clock signal and to transmit the assigned clock signal to an output gate (995);
wherein the output gate generates an output clock signal (996).

13. The apparatus of claim 12, further comprising:
a number N of flip flops, wherein each flip flop is configured to receive the status signal of the assigned clock from the corresponding processor, to retime the status o signal of the assigned clock and to provide the retimed status signal of the assigned clock.

## Patentansprüche

1. Vorrichtung, die Folgendes aufweist:
eine erste Synchronisiereinheit (410a, 420a), die mit einem ersten Taktsignal (401a) verbunden ist, die einen ersten Eingang, der ausgestaltet ist, um ein Taktauswahlsignal (403) zu empfangen, und einen zweiten Eingang aufweist, der ausgestaltet ist, um ein Zustandssignal (461b) eines zweiten Takts zu empfangen, und ausgestaltet ist, um ein synchronisiertes Freigabeanforderungssignal (411a) des ersten Takts und ein synchronisiertes Zustandssignal (421a) des zweiten Takts zu erzeugen;
einen ersten Prozessor (440a), der ausgestaltet ist, um das synchronisierte Freigabeanforderungssignal des ersten Takts und das synchronisierte Zustandssignal des zweiten Takts zu empfangen, und ausgestaltet ist, um ein synchronisiertes Freigabesignal (441a) des ersten Takts und ein Zustandssignal (461a) des ersten Takts zu erzeugen;
ein erstes Taktgatter (480a), das ausgestaltet ist, um das Freigabesignal des ersten Takts zu empfangen, um das erste Taktsignal zu gattern und um das erste Taktsignal an ein Ausgangsgatter (495) zu senden;
eine zweite Synchronisierereinheit (410b, 420b), die mit einem zweiten Taktsignal (401b) verbunden ist, die einen ersten Eingang, der ausgestaltet ist, um ein invertiertes Signal des Taktauswahlsignals zu empfangen, und einen zweiten Eingang aufweist, der ausgestaltet ist, um das Zustandssignal des ersten Takts zu empfangen und ausgestaltet ist, um ein synchronisiertes Freigabeanforderungssignal (411b) des zweiten Takts und ein synchronisiertes Zustandssignal (421b) des ersten Takts zu erzeugen;
einen zweiten Prozessor (440b), der ausgestaltet ist, um das synchronisierte Freigabeanforderungssignal des zweiten Takts und um das synchronisierte Zustandssignal des ersten Takts zu empfangen, und ausgestaltet ist, um ein Freigabesignal (441b) des zweiten Takts und das Zustandssignal des zweiten Takts zu erzeugen; und
ein zweites Taktgatter (480b), das ausgestaltet ist, um das Freigabesignal des zweiten Takts zu empfangen, um das zweite Taktsignal zu gattern und das zweite Taktsignal an das Ausgangsgatter zu senden, das ein Ausgangstaktsignal (496) erzeugt,
wobei die Vorrichtung durch Folgendes gekennzeichnet ist:
das Zustandssignal (461b) des zweiten Takts ist bestimmt, um anzugeben, wann der zweite Takt freigegeben ist, und um anzugeben, wann der zweite Takt freizugeben ist; und
das Zustandssignal (461a) des ersten Taktsignals ist bestimmt, um anzugeben, wann der erste Takt freigegeben ist, und um anzugeben, wann der erste Takt freizugeben ist.

2. Vorrichtung nach Anspruch 1, die ferner Folgendes aufweist:
einen ersten Flip-Flop (460a), der ausgestaltet ist, um das Zustandssignal des ersten Takts von dem ersten Prozessor zu empfangen, das Zustandssignal des ersten Takts einzutakten und um das eingetaktete Zustandssignal des ersten Takts bereitzustellen; und
einen zweiten Flip-Flop (460b), der ausgestaltet ist, um das Zustandssignal von dem zweiten Prozessor zu empfangen, das Zustandssignal des zweiten Takts einzutakten und um das eingetaktete Zustandssignal des zweiten Takts bereitzustellen.

3. Vorrichtung nach Anspruch 1, wobei die erste Synchronisierereinheit und die zweite Synchronisierereinheit jeweils eine Menge von Synchronisierern aufweisen, die parallel verbunden sind.

4. Vorrichtung nach Anspruch 3, wobei jeder Synchronisierer einen oder mehrere Flip-Flops aufweist.

5. Vorrichtung nach Anspruch 1, wobei der erste Prozessor und der zweite Prozessor Zustandsmaschinen des Mealy-Typs sind.

6. Vorrichtung, die Folgendes aufweist:
eine erste Synchronisierereinheit (810a, 820a, 830a), die mit einem ersten Taktsignal verbunden ist, die einen ersten Eingang, der ausgestaltet ist, um ein Taktauswahlsignal durch einen 2-zu-3-Decodierer (805) zu empfangen, und einen zweiten Eingang und einen dritten Eingang aufweist, die ausgestaltet sind, um ein Zustandssignal eines zweiten Takts, um anzugeben, wann der zweite Takt freigegeben ist und wann der zweite Takt freizugeben ist, beziehungsweise ein Zustandssignal eines dritten Takts zu empfangen, um anzugeben, wann der dritte Takt freigegeben ist, und um anzugeben, wann der dritte Takt freizugeben ist, und ausgestaltet sind, um ein synchronisiertes Freigabeanforderungssignal des ersten Takts und synchronisierte Zustandssignale des zweiten beziehungsweise des dritten Takts an ein erstes Gatter zu erzeugen;
einen ersten Prozessor (840a), der ausgestaltet ist, um das synchronisierte Freigabeanforderungssignal des ersten Takts und ein Ausgangssignal des ersten Gatters zu empfangen, und ausgestaltet ist, um ein Freigabesignal des ersten Takts und ein Zustandssignal des ersten Takts zu erzeugen, um anzugeben, wann der erste Takt freigegeben ist, und um anzugeben, wann der erste Takt freizugeben ist;
ein erstes Taktgatter (880a), das ausgestaltet ist, um das Freigabesignal des ersten Takts zu empfangen, um das erste Taktsignal zu gattern und um das erste Taktsignal an ein Ausgangsgatter (895) zu senden;
eine zweite Synchronisierereinheit (810b, 820b, 830b), die mit einem zweiten Taktsignal verbunden ist, die einen ersten Eingang, der ausgestaltet ist, um das Taktauswahlsignal durch den 2-zu-3-Decodierer zu empfangen, und einen zweiten Eingang und einen dritten Eingang aufweist, die ausgestaltet sind, um das Zustandssignal des ersten Takts beziehungsweise das Zustandssignal des dritten Takts zu empfangen, und ausgestaltet sind, um ein synchronisiertes Freigabeanforderungssignal des zweiten Takts und synchronisierte Zustandssignale des ersten beziehungsweise dritten Takts an ein zweites Gatter zu erzeugen;
einen zweiten Prozessor (840b), der ausgestaltet ist, um das synchronisierte Freigabeanforderungssignal des zweiten Takts und ein Ausgangssignal des zweiten Gatters zu empfangen, und ausgestaltet ist, um ein Freigabesignal des zweiten Takts und das Zustandssignal des zweiten Takts zu erzeugen;
ein zweites Taktgatter (880b), das ausgestaltet ist, um das Freigabesignal des zweiten Takts zu empfangen, um das zweite Taktsignal zu gattern und um das zweite Taktsignal an das Ausgangsgatter (895) zu senden,
eine dritte Synchronisierereinheit (810c, 820c, 830c), die mit einem dritten Taktsignal verbunden ist, die einen ersten Eingang, der ausgestaltet ist, um das Taktauswahlsignal durch den 2-zu-3-Decodierer zu empfangen, und einen zweiten Eingang und einen dritten Eingang aufweist, die ausgestaltet sind, um die Zustandssignale des ersten beziehungsweise des zweiten Takts zu empfangen, und ausgestaltet sind, um ein synchronisiertes Freigabeanforderungssignal des dritten Takts und synchronisierte Zustandssignale des ersten beziehungsweise des zweiten Takts an ein drittes Gatter zu erzeugen;
einen dritten Prozessor (840c), der ausgestaltet ist, um das synchronisierte Freigabeanforderungssignal des dritten Takts und ein Ausgangssignal des dritten Gatters zu empfangen, und ausgestaltet ist, um ein Freigabesignal des dritten Takts und das Zustandssignal des dritten Takts zu erzeugen; und
ein drittes Taktgatter (880c), das ausgestaltet ist, um das Freigabesignal des dritten Takts zu empfangen, um das dritte Taktsignal zu gattern und das dritte Taktsignal an das Ausgangsgatter (895) zu senden, das ein Ausgangstaktsignal (896) erzeugt.

7. Vorrichtung nach Anspruch 6, die ferner Folgendes umfasst:
einen ersten Flip-Flop (860a), der ausgestaltet ist, um das Zustandssignal des ersten Takts von dem ersten Prozessor zu empfangen, um das Zustandssignal des ersten Takts einzutakten und um das eingetaktete Zustandssignal des ersten Takts bereitzustellen; und
einen zweiten Flip-Flop (860b), der ausgestaltet ist, um das Zustandssignal des zweiten Takts von dem zweiten Prozessor zu empfangen, um das Zustandssignal des zweiten Takts einzutakten und um das eingetaktete Zustandssignal des zweiten Takts bereitzustellen; und
einen dritten Flip-Flop (860c), der ausgestaltet ist, um das Zustandssignal des dritten Takts von dem dritten Prozessor zu empfangen, um das Zustandssignal des dritten Takts einzutakten und um das eingetaktete Zustandssignal des dritten Takts bereitzustellen.

8. Vorrichtung nach Anspruch 6, wobei die erste, die zweite und die dritte Synchronisierereinheit jeweils parallel verbunden sind.

9. Vorrichtung nach Anspruch 8, wobei jeder Synchronisierer einen oder mehrere Flip-Flops aufweist.

10. Vorrichtung nach Anspruch 6, wobei der erste, der zweite und der dritte Prozessor Zustandsmaschinen des Mealy-Typs sind.

11. Vorrichtung nach Anspruch 6, wobei das erste, das zweite und das dritte Gatter logische ODER-Gatter sind.

12. Vorrichtung, die Folgendes aufweist:
eine Anzahl N höher als 3 von Synchronisierereinheiten (910a ... 910n), wobei jeder Synchronisierer ausgestaltet ist, um mit einem zugewiesenen Taktsignal verbunden zu werden, der einen ersten Eingang, der ausgestaltet ist, um ein Taktauswahlsignal durch einen ceil(log2(N))-zu-N-Decodierer zu empfangen und (N-1) Eingänge aufweist, die ausgestaltet sind, um jeweils Zustandssignale von anderen (N-1) Takten zu empfangen, um anzugeben, wann die anderen Takte freigegeben sind, und um anzugeben, wann die anderen Takte freizugeben sind, und ausgestaltet ist, um ein synchronisiertes Freigabeanforderungssignal des zugewiesenen Takts und (N-1) synchronisierte Zustandssignale von anderen (N-1) Takten an ein zugewiesenes ODER-Gatter zu erzeugen;
eine Anzahl N von Prozessoren (940a...940n), wobei jeder Prozessor ausgestaltet ist, um das synchronisierte Freigabeanforderungssignal des zugewiesenen Takts und das Ausgangssignal des zugewiesenen ODER-Gatters zu empfangen, und ausgestaltet sind, um ein Freigabesignal des zugewiesenen Takts und das Zustandssignal des zugewiesenen Takts zu erzeugen, um anzugeben, wann der zugewiesene Takt freigegeben ist, und um anzugeben, wann der zugewiesene Takt freizugeben ist, und
eine Anzahl N von Taktgattern (980a...980n), wobei jedes Taktgatter ausgestaltet ist, um das Freigabesignal des zugewiesenen Takts zu empfangen und das zugewiesene Taktsignal zu gattern und um das zugewiesene Taktsignal an ein Ausgangsgatter (995) zu senden;
wobei das Ausgangsgatter ein Ausgangstaktsignal (996) erzeugt.

13. Vorrichtung nach Anspruch 12, die ferner Folgendes aufweist:
eine Anzahl N von Flip-Flops, wobei jeder Flip-Flop ausgestaltet ist, um das Zustandssignal des zugewiesenen Takts von dem entsprechenden Prozessor zu empfangen, das Zustandssignal des zugewiesenen Takts einzutakten und um das eingetaktete Zustandssignal des zugewiesenen Takts bereitzustellen.

## Revendications

1. Appareil, comprenant :
une première unité de synchroniseur (410a, 420a) connectée à un premier signal d'horloge (401a), ayant une première entrée configurée pour recevoir un signal de sélection d'horloge (403) et une seconde entrée configurée pour recevoir un signal d'état (461b) d'une seconde horloge et configurée pour générer un signal de demande d'activation synchronisé (411a) de la première horloge et un signal d'état synchronisé (421a) de la seconde horloge ;
un premier processeur (440a) configuré pour recevoir le signal de demande d'activation synchronisé de la première horloge et le signal d'état synchronisé de la seconde horloge et configuré pour générer un signal d'activation synchronisé (441a) de la première horloge et un signal d'état (461a) de la première horloge ;
une première porte d'horloge (480a) configurée pour recevoir le signal d'activation de la première horloge pour appliquer le premier signal d'horloge à travers un circuit de porte logique et pour transmettre le premier signal d'horloge à une porte de sortie (495) ;
une seconde unité de synchroniseur (410b, 420b) connectée à un second signal d'horloge (401b), ayant une première entrée configurée pour recevoir un signal inversé du signal de sélection d'horloge et une seconde entrée configurée pour recevoir le signal d'état de la première horloge d'état et configurée pour générer un signal de demande d'activation synchronisé (411b) de la seconde horloge et un signal d'état synchronisé (421b) de la première horloge ;
un second processeur (440b) configuré pour recevoir le signal de demande d'activation synchronisé de la seconde horloge et le signal d'état synchronisé de la première horloge et configuré pour générer un signal d'activation (441b) de la seconde horloge et le signal d'état de la seconde horloge ; et
une seconde porte d'horloge (480b) configurée pour recevoir le signal d'activation de la seconde horloge pour appliquer le second signal d'horloge à travers un circuit de porte logique et pour transmettre le second signal d'horloge à la porte de sortie qui génère un signal d'horloge de sortie (496),
où l'appareil est **caractérisé en ce que** :
le signal d'état (461b) de la seconde horloge sert à indiquer quand la seconde horloge est activée et à indiquer quand la seconde horloge doit être activée ; et
le signal d'état (461a) de la première horloge sert à indiquer quand la première horloge est activée et à indiquer quand la première horloge doit être activée.

2. Appareil selon la revendication 1, comprenant en outre :
une première bascule (460a) configurée pour recevoir le signal d'état de la première horloge depuis le premier processeur, pour resynchroniser le signal d'état de la première horloge et pour délivrer le signal d'état resynchronisé de la première horloge ; et
une seconde bascule (460b) configurée pour recevoir le signal d'état de la seconde horloge depuis le second processeur, pour resynchroniser le signal d'état de la seconde horloge et pour délivrer le signal d'état resynchronisé de la seconde horloge.

3. Appareil selon la revendication 1, dans lequel la première unité de synchroniseur et la seconde unité de synchroniseur comprennent respectivement un ensemble de synchroniseurs connectés en parallèle.

4. Appareil de la revendication 3, dans lequel chaque synchroniseur comprend une ou plusieurs bascules.

5. Appareil selon la revendication 1, dans lequel le premier processeur et le second processeur sont des machines d'état de type de Mealy.

6. Appareil comprenant :
une première unité de synchroniseur (810a, 820a, 830a) connectée à un premier signal d'horloge ayant une première entrée configurée pour recevoir un signal de sélection d'horloge par l'intermédiaire d'un décodeur 2 vers 3 (805) et une deuxième entrée et une troisième entrée configurées pour recevoir respectivement un signal d'état d'une deuxième horloge pour indiquer quand la deuxième horloge est activée et quand la deuxième horloge doit être activée et un signal d'état d'une troisième horloge pour indiquer quand la troisième horloge est activée et pour indiquer quand la troisième horloge doit être activée, et configurée pour générer un signal de demande d'activation synchronisé de la première horloge et des signaux d'état synchronisés de, respectivement, les deuxième et troisième horloges à une première porte ;
un premier processeur (840a) configuré pour recevoir le signal de demande d'activation synchronisé de la première horloge et un signal de sortie de la première porte, et configuré pour générer un signal d'activation de la première horloge et un signal d'état de la première horloge pour indiquer quand la première horloge est activée et pour indiquer quand la première horloge doit être activée ;
une première porte d'horloge (880a) configurée pour recevoir le signal d'activation de la première horloge pour appliquer le premier signal d'horloge à travers un circuit de porte logique et pour transmettre le premier signal d'horloge à une porte de sortie (895) ;
une deuxième unité de synchroniseur (810b, 820b, 830b) connectée à un deuxième signal d'horloge ayant une première entrée configurée pour recevoir le signal de sélection d'horloge par l'intermédiaire du décodeur 2 vers 3, et une deuxième entrée et une troisième entrée configurées pour recevoir respectivement le signal d'état de la première horloge et le signal d'état de la troisième horloge, et configurée pour générer un signal de demande d'activation synchronisé de la deuxième horloge et des signaux d'état synchronisés de, respectivement, les première et troisième horloges à une deuxième porte ;
un deuxième processeur (840b) configuré pour recevoir le signal de demande d'activation synchronisé de la deuxième horloge et un signal de sortie de la deuxième porte, et configuré pour générer un signal d'activation de la deuxième horloge et le signal d'état de la deuxième horloge ;
une deuxième porte d'horloge (880b) configurée pour recevoir le signal d'activation de la deuxième horloge pour appliquer le deuxième signal d'horloge à travers un circuit de porte logique et pour transmettre le deuxième signal d'horloge à la porte de sortie (895) ;
une troisième unité de synchroniseur (810c, 820c, 830c) connectée à un troisième signal d'horloge ayant une première entrée configurée pour recevoir le signal de sélection d'horloge par l'intermédiaire du décodeur 2 vers 3, et une deuxième entrée et une troisième entrée configurées pour recevoir respectivement les signaux d'état des première et deuxième horloges, et configurée pour générer un signal de demande d'activation synchronisé de la troisième horloge et des signaux d'état synchronisés de, respectivement, les première et deuxième horloges à une troisième porte ;
un troisième processeur (840c) configuré pour recevoir le signal de demande d'activation synchronisé de la troisième horloge et un signal de sortie de la troisième porte, et configuré pour générer un signal d'activation de la troisième horloge et le signal d'état de la troisième horloge ; et
une troisième porte d'horloge (880c) configurée pour recevoir le signal d'activation de la troisième horloge pour appliquer le troisième signal d'horloge à travers un circuit de porte logique et pour transmettre le troisième signal d'horloge à la porte de sortie (895) qui génère un signal d'horloge de sortie (896).

7. Appareil selon la revendication 6, comprenant en outre :
une première bascule (860a) configurée pour recevoir le signal d'état de la première horloge depuis le premier processeur, pour resynchroniser le signal d'état de la première horloge et pour délivrer le signal d'état resynchronisé de la première horloge, et ;
une deuxième bascule (860b) configurée pour recevoir le signal d'état de la deuxième horloge depuis le deuxième processeur, pour resynchroniser le signal d'état de la deuxième horloge et pour délivrer le signal d'état resynchronisé de la deuxième horloge, et ;
une troisième bascule (860c) configurée pour recevoir le signal d'état de la troisième horloge depuis le troisième processeur, pour resynchroniser le signal d'état de la troisième horloge et pour délivrer le signal d'état resynchronisé de la troisième horloge.

8. Appareil selon la revendication 6, dans lequel les première, deuxième et troisième unités de synchroniseur sont des ensembles de synchroniseurs respectivement connectés en parallèle.

9. Appareil selon la revendication 8, dans lequel chaque synchroniseur comprend une ou plusieurs bascules.

10. Appareil selon la revendication 6, dans lequel les premier, deuxième et troisième processeurs sont des machines d'état de type de Mealy.

11. Appareil selon la revendication 6, dans lequel les première, deuxième et troisième portes logiques sont des portes logiques OU.

12. Appareil, comprenant :
un nombre N supérieur à trois d'unités de synchroniseur (910a, ..., 910n), où chaque synchroniseur est configuré pour être connecté à un signal d'horloge affecté ayant une première entrée configurée pour recevoir un signal de sélection d'horloge à travers un décodeur arrondi supérieur de (log2 (N)) à N, et (N-1) entrées configurées pour recevoir respectivement des signaux d'état des autres (N-1) horloges pour indiquer quand les autres horloges doivent être activées, et configuré pour générer un signal de demande d'activation synchronisé de l'horloge affectée et (N-1) signaux d'état synchronisés des autres (N-1) horloges à une porte OU affectée ;
un nombre N de processeurs (940a, ... 940n), où chaque processeur est configuré pour recevoir le signal de demande d'activation synchronisé de l'horloge affectée et le signal de sortie de la porte OU affectée, et configuré pour générer un signal d'activation de l'horloge affectée et le signal d'état de l'horloge affectée pour indiquer quand l'horloge affectée est activée et pour indiquer quand l'horloge affectée doit être affectée ; et
un nombre N de portes d'horloge (980a, ..., 980n), où chaque porte d'horloge est configurée pour recevoir le signal d'activation de l'horloge affectée pour appliquer le signal d'horloge affecté à travers un circuit de porte logique et pour transmettre le signal d'horloge affecté à une porte de sortie (995) ;
où la porte de sortie génère un signal d'horloge de sortie (996).

13. Appareil selon la revendication 12, comprenant en outre :
un nombre N de bascules, où chaque bascule est configurée pour recevoir le signal d'état de l'horloge affectée depuis le processeur correspondant, pour resynchroniser le signal d'état de l'horloge affectée et pour délivrer le signal d'état resynchronisé de l'horloge affectée.
